Europäisches Patentamt

European Patent Office

Office européen des brevets

(19)

(11) **EP 0 685 542 B1**

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(51) Int Cl.[6]: **C09D 155/00**, C09D 151/08, C09D 167/07, C09D 167/06, C09D 175/14

(21) Anmeldenummer: **95107601.7**

(22) Anmeldetag: **18.05.1995**

(54) **Wässrige, reaktive Mikrogeldispersionen, Verfahren zu ihrer Herstellung und ihre Verwendung**

Aqueous reactive microgel dispersions, process for their preparation and their use

Dispersions aqueuses réactives de nature microgel, procédé de leur préparation et leur utilisation

(84) Benannte Vertragsstaaten:
**AT BE CH DE DK ES FR GB IT LI NL SE**

(30) Priorität: **31.05.1994 DE 4418991**

(43) Veröffentlichungstag der Anmeldung:
**06.12.1995 Patentblatt 1995/49**

(73) Patentinhaber: **WOLFF WALSRODE AG**
**29655 Walsrode (DE)**

(72) Erfinder:
• **Dannhorn, Wolfgang, Dr.**
**D-29664 Walsrode (DE)**
• **Hoppe, Lutz, Dr.**
**D-29664 Walsrode (DE)**
• **Lühmann, Erhard, Dipl.-Ing.**
**D-29699 Bomlitz (DE)**
• **Juhl, Hans-Jürgen, Dr.**
**D-29683 Fallingbostel (DE)**

(74) Vertreter: **Braun, Rolf, Dr.**
**Bayer AG,**
**Konzernbereich RP,**
**Patente und Lizenzen**
**51368 Leverkusen (DE)**

(56) Entgegenhaltungen:
EP-A- 0 182 147        EP-A- 0 356 848
EP-A- 0 401 565        DE-A- 4 010 176

• ANGEWANDTE MAKROMOLEKULARE CHEMIE, Bd.103, 17. März 1982, BASEL CH Seiten 187 - 202 Y.CH. YU ET AL. 'Reative Microgels by Emulsion Polymerization of Unsaturated Polyester Resins'

**Beschreibung**

Die Erfindung betrifft wäßrige, reaktive Mikrogel-Dispersionen, ein Verfahren zu ihrer Herstellung und ihre Verwendung als Lackrohstoff.

Wäßrige, reaktive Lackbindemittel-Systeme auf der Basis ungesättigter, allylgruppenhaltiger, wasseremulgierbarer Polyesterharze werden in der DE-A 40 11 353, EP-A 0 182 147, DE-A 28 04 216, DE-A 29 05 666 beschrieben.

Sie ergeben nach dem Trockenvorgang flüssig-hochviskose Filme, die nach einem Radikalketten-Mechanismus thermisch mit oder ohne Radikalstarter oder durch energiereiche Strahlung gehärtet werden können. Die erhaltenen Oberflächen zeichnen sich durch einen guten Verlauf, gute Benetzung und hohe Füllkraft aus.

Solche allyletherhaltigen, wäßrigen Lackbindemittelsysteme erweisen sich als vorteilhaft, da sie vom Anwender ohne aufwendige Hygienevorkehrungen eingesetzt werden können. Gleichzeitig sind die fertig beschichteten Oberflächen praktisch geruchsfrei.

Die relativ niedrige Reaktivität der Allyletherdoppelbindungen bei radikalischen Kettenreaktionen bedingt jedoch niedrige Vorschubgeschwindigkeiten in den Härtungsanlagen von z. B. Möbellackierern, wodurch die Anwendung dieser Lackbindemittel aufgrund der relativ niedrigen Produktivität stark eingeschränkt wird.

Verbesserte Oberflächeneigenschaften können durch eine nachträgliche Modifizierung o.g. Polyesterharze erreicht werden (DE-A 3 935 495, DE-A 4 011 349).

Diese Polyester werden in wasserfreier Form nachträglich mit organischen Isocyanaten umgesetzt, was einen Anstieg der Viskosität zur Folge hat. Die anschließende mechanische, d. h. lösemittelfreie Emulgierung setzt jedoch eine eingeschränkte Viskosität des Harzes voraus und beschränkt die Isocyanatumsätze auf wenige Prozent.

Gehärtete Überzüge aus solchen allyletherhaltigen Polyesterurethanen zeichnen sich aus durch große Härte, gute Porenzeichnung auf Holz, verringertes Eindringen in Holz sowie gute Haftfestigkeiten. Die Härtungsgeschwindigkeiten sind jedoch mit 1 bis 2 m/min (Hg-Hochdrucklampe; 80 W/cm) für viele technische Anwendungen zu gering.

Höhere Härtungsgeschwindigkeiten ergeben sich beim Einsatz von Lackbindemitteln mit reaktiven, olefinischen Doppelbindungen, wie Acryloyl- oder Methacrylolyl-Gruppen. Dabei ist ein möglicher Weg der Einsatz von sogenannten Reaktivverdünnern; das sind niedermolekulare, mono- oder polyfunktionell ungesättigte Verbindungen, die z. B. einer wäßrigen Polyesteremulsion zugesetzt werden.

Ein Nachteil von reaktivverdünnerhaltigen Lacksystemen ist die Reizwirkung dieser reaktiven Verbindungen auf Augen und Schleimhäute. Sie setzen im Umgang entsprechende, aufwendige Vorsichtsmaßregeln voraus.

Ein anderer Weg zu reaktiven, wäßrigen Lack-Bindemittelsystemen ist der Einsatz von acryloylgruppenhaltigen Polyestern, wie sie DE-A 28 53 921 beschreibt, die ohne Zusatz der o. g. niedermolekularen, reaktiven Verbindungen copolymerisiert werden. Die Synthese der Polyester erfolgt in wasserunlöslichen, organischen Lösungsmitteln. Vor oder nach der Überführung in eine wäßrige Emulsion muß das Lösungsmittel abdestilliert werden. Diese acryloylgruppenhaltigen Polyester zeichnen sich durch eine günstige Verarbeitungsviskosität aus, die optischen Oberflächeneigenschaften, wie Porenzeichnung und Porenbenetzung, sind im Vergleich zu wäßrigen, allyletherhaltigen Polyesterbindemittelsystemen jedoch mangelhaft.

Unter Umgehung der Lösungsmittelproblematik beschreibt US-P 4 451 509 ein Verfahren zur Herstellung einer Mischung aus einem Acrylatpräpolymer und einem allyletherhaltigen Polyesterharz, das ohne Einsatz von Lösungsmitteln in eine wäßrige Emulsion überführt werden kann.

Ein ähnliches Verfahren beschreibt DE-A 4 228 713, wo ein methacryloylgruppenhaltiges Präpolymer mit einem strahlenhärtbaren Polyesterharz oder Polyesterurethanharz gemischt und anschließend emulgiert wird.

Allen oben beschriebenen wäßrigen Lackbindemittelsystemen ist gemein, daß sie zu flüssig-hochviskosen, in den üblichen, organischen Lösungsmitteln löslichen Filmen auftrocknen. Mit den üblichen organischen Lösemitteln seien gemeint Alkohole, wie z. B. Methanol, Ethanol oder Isopropanol, Ketone, wie z. B. Aceton oder Methylethylketon, Ester, wie z. B. Methyl-, Ethyl- oder Butylacetat und aromatische und nichtaromatische Kohlenwasserstoffe, wie z: B. Toluol oder Xylol bzw. Benzin.

Ein ideales wäßriges Lackbindemittelsystem müßte somit die guten optischen Eigenschaften von allylgruppenhaltigen Polyestersystemen und die Reaktivität von acryloylgruppenhaltigen Harzdispersionen aufweisen. Zudem sollte es unbedenklich handhabbar sein.

Überraschenderweise wurde ein reaktives, wäßriges Lackbindemittelsystem gefunden, welches monomerenfrei, lösemittelfrei und nicht kennzeichnungspflichtig ist, welches zu in den o. g. üblichen organischen Lösemitteln unlöslichen Überzügen verfilmt und welches mittels thermisch zerfallender Radikalstarter als auch durch energiereiche Strahlung gehärtet werden kann.

Gegenstand der Erfindung sind wäßrige, reaktive Mikrogeldispersionen, dadurch gekennzeichnet, daß die dispergierten Mikrogelteilchen einen mittleren Teilchendurchmesser von 0,01 bis 1 μm besitzen, in den o. g. üblichen organischen Lösungsmitteln unlöslich aber quellbar sind und ohne weitere Verfilmungshilfsstoffe, wie z. B. Koaleszenten zu gleichmäßigen, transparenten reaktiven Filmen auftrocknen. Die reaktiven Mikrogele sind ferner durch eine Jodzahl von 2 bis 100 gekennzeichnet. Überraschend weisen solche reaktiven Mikrogeldispersionen eine den acryloylgruppenhaltigen, wäßrigen Lackbindemittelsystemen vergleichbare Härtungsgeschwindigkeit auf.

Die erfindungsgemäße Mikrogeldispersion ist weiterhin dadurch gekennzeichnet, daß sie durch radikalische Polymerisation einer wäßrigen Harzemulsion, bestehend aus mindestens einem in Wasser emulgierten, allyletherhaltigen Polyester oder Polyesterurethan oder gegebenenfalls Mischungen von beiden und/oder Mischungen dieser mit anderen olefinisch ungesättigten und/oder gesättigten Verbindungen, wobei das Verhältnis U

$$\hat{=} \frac{\text{Jodzahl des erfindungsgemäßen Mikrogels}}{\text{Jodzahl der Mischung der Augsgangsverbindungen}} \text{die}$$

Bedingung 0<U<1 vorzugsweise 0,4<U<0,9 erfüllt, hergestellt werden.

Gegenstand der Erfindung ist auch die Verwendung der erfindungsgemäßen Mikrogel-Dispersion als Lackrohstoff.

Die erfindungsgemäß zum Einsatz kommenden ungesättigten, allyletherhaltigen Polyester und Polyesterurethane sind ohne Emulgatoren in Wasser dispergierbar bzw. kolloidal löslich. Zur Stabilisierung können Emulgatoren in Konzentrationen von 0 bis 5 Gew.-%, eingesetzt werden. Die Herstellung der Harze wird beschrieben in DE-A 3 441 154, 2 905 666, 2 804 216, 4 011 353, 3 218 200, 0 182 147 bzw. DE-A 4 011 349, 3 935 495 und EP-A 0 315 920.

Wie in den Dokumenten aufgeführt ist, sind diese Polyester bzw. Polyesterurethane aufgrund ihres Alkylenoxidanteils und/oder aufgrund eines Anteils an Salzgruppen, wie z. B. Carboxylaten oder Sulfonaten wasseremulgierbar, bzw. kolloidal löslich.

Bei den für die erfindungsgemäße Vorpolymerisation zum Einsatz kommenden Emulsionen handelt es sich bevorzugt um Dispersionen der o. g. selbstemulgierbaren, ungesättigten Polyester oder Polyesterurethane oder ggf. Mischungen von beiden oder Mischungen dieser Harze mit anderen Verbindungen wie sie in den Lackrohstoff-Tabellen von Karsten (Vincentz-Verlag) aufgeführt sind (unter der Voraussetzung, daß die Mischungen stabile, wäßrige Emulsionen ergeben).

Beispielhaft seien folgende Produktgruppen genannt:

Gesättigte Polyester, ungesättigte Polyester, Isocyanatharze, Polyesteracrylate, Polyetheracrylate, Polyurethanacrylate, Alkydharze, Polyether, Polyacrylate, Ketonharze, Maleinatharze, Polycaprolaktone, Polyurethane, Epoxydharze, Polyvinylverbindungen, Aminoharze, Phenolharze, Silikonharze, Phthalate, Adipate, Sebazate, Phosphorsäureester, Acelainsäureester, Ester höherer Fettsäuren, Glykolsäureester, Trimellitsäureester, Sulfonsäureester, Zitronensäureester, Sulfonsäureamide, Naturharzester, wie die Ester von Colophonium bzw. hydriertem Colophonium, Zuckerderivate, wie Saccaroseacetobutyrat.

Weiterhin können diese Mischungen enthalten: Emulgatoren, epoxidierte Weichmacher, wie epoxidierte Ester natürlicher Fettsäuren und epoxidierte Triglyceride, wie epoxidiertes Sojabohnenöl oder Leinöl, polymerisierbare Weichmacher und flammhemmende Weichmacher, wie Trichlorbutylphosphat, Trichlorethylphosphat oder Diphenyloktylphosphat sowie ethoxylierte Derivate der o. g. Produkte, wie z. B. ethoxylierte Phosphorsäureester sowie Celluloseester wie z. B. Cellulosenitrat, Celluloseacetat oder Celluloseacetobutyrat.

Die Herstellung der erfindungsgemäßen Öl-in-Wasseremulsionen erfolgt durch portionsweise Zugabe des Polyesters oder Polyesterurethans in Wasser oder umgekehrt. Beim Einrühren finden geeignete Rührvorrichtungen, Dispergatoren oder Dissolver, Verwendung.

Der Verfahrensschritt zur Darstellung erfindungsgemäßer Mikrogeldispersion erfolgt durch radikalische Polymerisation der Harzemulsion unter Einsatz wasserlöslicher und/oder öllöslicher Initiatoren, die vorgelegt oder portionsweise oder kontinuierlich zudosiert werden können, ggf. bei Anwesenheit eines Beschleunigers, wobei ein Verhältnis

$$U \hat{=} \frac{\text{Jodzahl des erfindungsgemäßen Mikrogels}}{\text{Jodzahl der Mischung der Augsgangsverbindungen}} \text{die}$$

von 0<U<1 vorzugsweise 0,4<U<0,9 eingestellt wird.

Beispiele für geeignete wasserlösliche Initiatoren sind u. a.:

Kalium- und Ammoniumpersulfat, Tertiärbutylhydroperoxid und Wasserstoffperoxid.

Sie können zusammen mit Beschleunigern, wie Eisen-II-Sulfat, Natriumsulfit, Natriumhydrogensulfit, Natriumthiosulfat oder Ascorbinsäure, zum Einsatz kommen.

Als Beispiele für öllösliche Initiatoren seien Alkyl- bzw. Arylperoxide, wie z. B. Dibenzoylperoxid, Dilaurylperoxid, Cyclohexanonperoxid oder Percarbonate und AzoVerbindungen, genannt.

Die Polymerisation wird in einem Temperaturbereich von 20 - 100 °C, vorzugsweise 40 - 60 °C, unter Inertgasatmosphäre durchgeführt.

Die erfindungsgemäßen Lackbindemittel weisen im ausgehärteten Zustand sehr gute Schleifbarkeit und Härte auf. Weiterhin zeichnen sie sich aus durch eine hohe Transparenz, Beständigkeit gegen chemische und mechanische Belastung sowie eine geringe Vergilbungsneigung. Dem Anwender steht zur Erzielung besonderer Effekte die Möglichkeit offen, Füllstoffe, Pigmente, Farbstoffe, Thixotropiermittel, Glättmittel, Mattierungsmittel, Verlaufsmittel usw. einzusetzen.

Mögliche Applikationsformen erfindungsgemäßer Lackbindemittel sind: Spritzen, Walzen, Rakeln, Gießen, Streichen und Tauchen.

Die Härtung der Überzüge nach der Verfilmung, d. h. nach dem Verdunsten des Wassers, erfolgt durch radikalische Polymerisation, entweder thermisch mit oder ohne Zugabe von polymerisationsauslösenden Initiatoren oder mittels energiereicher Strahlung, wie UV-, Elektronen-, Röntgen- oder Gamma-Strahlung, bei möglicher Anwesenheit eines Fotoinitiators.

Besonders bevorzugt ist die Härtung mittels UV-Strahlung in Verbindung mit Fotoinitiatoren, wie z. B. aromatischen Ketoverbindungen, Benzophenone, Alkylbenzophenone, halogenmethylierte Benzophenone, Antrone, halogenierte Benzophenone, Phenylglyoxylsäureester, Antrachinon und seine Derivate, Benzylketale und Hxdroxyalkylphenone, Benzoine und seine Derivate sowie Gemische dieser Verbindungen und organische Phosphinoxide, wie z. B. 2.4.6 Trimethylbenzoyldiphenylphosphinoxid.

Eine mögliche thermische Härtung erfolgt unter Einsatz der o. g. wasserlöslichen oder öllöslichen Initiatoren mit oder ohne Zusatz von Beschleunigern in Form von Schwermetallsalzen von Carbonsäuren, Schwermetallchelaten, Acetaten, Naphtenaten und Acetylacetonaten von Kobalt, Mangan oder Vanadium. Die Zugabe des Beschleunigers erfolgt in Form einer wäßrigen Lösung oder Emulsion.

Alle folgenden Umsetzungen wurden unter Stickstoffatmosphäre durchgeführt. Die Jodzahlen, der in den folgenden Beispielen verwendeten Emulsionen und erfindungsgemäßen Mikrogeldispersionen, wurden nach Wijs gemäß DIN 53241 bestimmt (siehe Tabelle 1).

Der Gegenstand der Erfindung soll anhand der folgenden Beispiele näher erläutert werden.

## Beispiel 1

a) 3.200 g eines in den üblichen, organischen Lösemitteln löslichen ungesättigten Polyesterurethanharzes, dessen Herstellung in der DE-A 4 011 349 (Verfahrensbeispiel 2) beschrieben wird, wurden vorgelegt. Mit Hilfe eines Dissolvers wurden 40 g 12,5%iges Amoniakwasser eingerührt. Anschließend erfolgte die Zugabe von 104 g Natriumalkylphenolpolyglykolethersulfat (Rewopol® NOS 25 der Firma REWO) und 56 g Polyethoxynonylphenol (Antarox® CO 630 der Firma GAF). Schließlich wurde mit 4.600 g entmineralisiertem Wasser verdünnt.

b) Unter Rühren (100 U/min) wurde die Emulsion auf 49 °C erwärmt und nach Zugabe einer Lösung von 5 g Isoascorbinsäure in 10 g entmineralisiertem Wasser wurden 110 g einer 2,8%igen wäßrigen Wasserstoffperoxidlösung über einen Zeitraum von 5 min zudosiert.

Nach 90 min Reaktionszeit wurde die Mikrogeldispersion abgekühlt und filtriert (25 µm Netz). Der Festkörpergehalt betrug 41 %. Eine Probe ergab beim Auftragen auf eine Glasplatte einen kraterfreien, gut verlaufenden Film, der nach dem Auftrocknen unlöslich war in Aceton, Essigester und Toluol.

c) Zur UV-Härtung wurden der unter b) erhaltenen Mikrogeldispersion 5 % (bezogen auf Festkörper) 2-Hydroxy-2-Methyl-1-Phenylpropan-1-on (Darocur® 1173 der Firma Merck) zugesetzt und vermischt. Mit Hilfe eines Kastenrakels wurde auf einer Glasplatte ein Aufzug mit einer Schichtdicke von 90 µm hergestellt, getrocknet und mit UV-Licht einer Hg-Hochdrucklampe bestrahlt (Leistung: 80 W/cm; Vorschubgeschwindigkeit: 5 m/min/Lampe). Nach der Härtung wurde eine schleifbare Oberfläche mit einer Pendelhärte nach König nach 24 h (DIN 53157) von 75 sec erhalten (siehe Tabelle 1).

## Beispiel 2

Analog Beispiel 1 a) wurde eine Emulsion gefertigt aus 360 g des in Beispiel 1 a) eingesetzten Polyesterurethans, 90 g eines Polyesteracrylats (Laromer® LR 87 99 der Firma BASF), 5,6 g 12,5%iges Ammoniakwasser, 14,63 g Rewopol NOS 25 (REWO), 7,88 g Antarox CO 630 (GAF) und 433,56 g entmineralisiertem Wasser.

Unter Rühren (100 U/min) wurden 800 g dieser Emulsion auf 49°C erwärmt und nach Zugabe von 1 g Natriumhydrogensulfit in 20 g entmineralisiertem Wasser wurden über einen Zeitraum von 5 min 2 g Kaliumperoxodisulfat in 50 g Wasser kontinuierlich zudosiert.

Nach 6,5 h Reaktionszeit wurde abgekühlt und über ein 25-µm-Netz filtriert. Eine Probe der Mikrogeldispersion, die einen Festkörpergehalt von 47,3 % hatte, ergab nach dem Aufziehen auf eine Glasplatte einen kraterfreien, gut verlaufenden Film, der unlöslich war in Aceton, Essigester und Toluol.

Die UV-Härtung wurde wie in Beispiel 1 c) beschrieben durchgeführt und die Meßwerte in Tabelle 1 zusammengestellt.

## Beispiel 3

400 g eines ungesättigten allyletherhaltigen Polyesterharzes (Bayhydrol® 850 W der Firma Bayer), 5 g 12,5%ige Ammoniaklösung, 13 g Rewopol NOS 25 (REWO), 7 g Antarox CO 630 (GAF) und 495 g entmineralisiertes Wasser wurden, wie in Beispiel 1 a) beschrieben, zu einer Öl-in-Wasseremulsion emulgiert.

800 g dieser Emulsion wurden unter Rühren (100 U/min) auf 49 °C erwärmt und die Polymerisation nach Zulauf von 0,5 g Isoascorbinsäure in 10 g entmineralisiertem Wasser durch Zugabe von 1 g einer 30%igen Wasserstoffperoxid-Lösung in 10 g Wasser gestartet.

Nach 100 min Reaktionszeit wurde abgekühlt und filtriert (25 µm-Netz). Der Festkörpergehalt betrug 41,2 %. Ein auf einer Glasplatte aufgezogener 90-µm-Film war nach dem Verdunsten des Wassers kraterfrei, zeigte einen guten Verlauf und war unlöslich in Aceton, Essigester und Toluol.

Bei der UV-Härtung wurde verfahren wie in Beispiel 1 c) beschrieben (Pendelhärte siehe Tabelle 1).

## Beispiel 4

304 g des in Beispiel 1 beschriebenen Polyesterurethans und 16 g eines organischen Polyisocyanats (Basonat® FDS 3425 der Firma Bayer) wurden mit Hilfe eines Dissolvers vermischt. Im Anschluß wurden 4 g 12,5%ige Ammoniaklösung eingerührt. Dann erfolgt die Zugabe einer Emulgatorlösung, bestehend aus 10,4 g Rewopol NOS 25 (REWO), 5,6 g Antarox CO 630 (GAF) und 64 g entmineralisiertem Wasser. Zum Schluß wurde die Mischung mit 396 g Wasser verdünnt, um eine Öl-in-Wasseremulsion zu erhalten.

Unter Rühren (100 U/min) wurde die Emulsion auf 41 °C aufgeheizt und mit einer Lösung von 0,5 g Isoascorbinsäure in 10 g Wasser versetzt. Dann erfolgte über einen Zeitraum von 5 min die kontinuierliche Zugabe einer Lösung aus 1 g 30%igem Wasserstoffperoxid in 10 g Wasser.

Nach 6,5 h wurde die Polymerisation durch Abkühlen abgebrochen. Der Festkörpergehalt betrug 40,1 %.

Eine Probe der Mikrogeldispersion ergab nach dem Aufziehen und Trocknen auf eine Glasplatte einen kraterfreien, gut verlaufenden, in Aceton, Essigester und Toluol unlöslichen Film.

Die UV-Härtung der Filme erfolgte analog Beispiel 1 c) (Pendelhärten siehe Tabelle 1).

## Beispiel 5

800 g des in Beispiel 1 a) verwendeten Polyesterurethanharzes wurden mit 0,3 g des öllöslichen Initiators Tertiärbutylperbenzoat vermischt. Diese Mischung wurde, wie in Beispiel 1 a) beschrieben, in eine Öl-in-Wasseremulsion überführt.

Nach dem Aufheizen auf 49°C wurde die Emulsion unter Rühren (100 U/min) mit einer Lösung von 0,5 g Isoascorbinsäure in 10 g entmineralisiertem Wasser versetzt. Nach 95 min wurde abgekühlt. Es wurde eine Mikrogeldispersion mit einem Festkörpergehalt von 43,2 % erhalten.

Eine Probe der Reaktionsmischung ergab nach dem Aufziehen und Trocknen auf eine Glasplatte einen kraterfrei, gut verlaufenden, in Aceton, Essigester und Toluol unlöslichen Film.

Die nachfolgende UV-Härtung der Filme wurde gemäß Beispiel 1 c) durchgeführt (Pendelhärten siehe Tabelle 1).

## Beispiel 6

3.200 g des in Beispiel 1 a) beschriebenen ungesättigten Polyesterurethans wurden vorgelegt. Mit Hilfe eines Dissolvers wurden 7.400 g entmineralisiertes Wasser portionsweise zugemischt.

Unter Rühren (100 U/min) und unter Vakuum wurde die Emulsion auf 41 °C erwärmt und nach Zugabe von 5 g Isoascorbinsäure in 10 g entmineralisiertem Wasser wurden 110 g einer 2,8%igen wäßrigen Wasserstoffperoxidlösung über einen Zeitraum von 1 min zudosiert.

Nach 240 min Reaktionszeit wurde die Mikrogeldispersion abgekühlt und filtriert (25 µm Netz). Der Festkörpergehalt betrug 29,9 %. Eine Probe ergab beim Auftragen auf eine Glasplatte einen kraterfreien, gut verlaufenden Film, der nach dem Trocknen unlöslich war in Aceton, Essigester und Toluol.

Die UV-Härtung wurde wie in Beispiel 1 c) beschrieben durchgeführt und die Meßwerte in Tabelle 1 zusammengestellt.

## Beispiel 7

224 g des in Beispiel 1 a) beschriebenen Polyesterurethans wurden mit 96 g eines mittelöligen, nichttrocknenden Alkydharzes (Rokraplast® AE 420 der Firma Kraemer Lackharzwerke) mit Hilfe eines Dissolvers vermischt. Im Anschluß wurden 4 g 12,5%ige Amoniaklösung eingerührt und mit 523 g entmineralisiertem Wasser verdünnt.

Unter Rühren (100 U/min) wurde die Emulsion auf 41 °C aufgeheizt und mit 0,5 g Isoascorbinsäure in 10 g Wasser versetzt. Dann erfolgte über einen Zeitraum von 1 min die kontinuierliche Zugabe einer Lösung aus 1 g 30%igem Wasserstoffperoxid in 110 g Wasser.

Nach 300 min wurde die Polymerisation durch Abkühlen abgebrochen. Der Festkörpergehalt betrug 29,2 %.

Eine Probe der Reaktionsmischung ergab nach dem Aufziehen und Trocknen auf eine Glasplatte einen kraterfreien, gut verlaufenden, in Aceton, Essigester und Toluol unlöslichen Film.

Die nachfolgende UV-Härtung der Filme wurde gemäß Beispiel 1 c) durchgeführt (Pendelhärte siehe Tabelle 1).

**Vergleichsbeispiel 1**

Eine Probe der in Beispiel 1 unter a) gefertigten, nicht polymerisierten, wäßrigen Polyesterurethanemulsion trocknete zu einem hochviskos-flüssigen Überzug auf.

Nach einer wie in Beispiel 1 c) beschrieben, durchgeführten UV-Härtung wurde ein fester, kraterfreier und gut verlaufender, aber nicht schleifbarer Film mit einer Pendelhärte nach König nach 24 h von 28 sec erhalten (Tabelle 1).

**Vergleichsbeispiel 2**

Eine Probe der in Beispiel 3 hergestellten (nicht polymerisierten) wäßrigen Emulsion des ungesättigten allyletherhaltigen Polyesterharzes trocknete zu einem hochviskos-flüssigen Überzug auf. Nach der UV-Härtung gemäß Beispiel 1 c) wurde ein fester, kraterfreier und gut verlaufender, aber nicht schleifbarer Film mit einer Pendelhärte nach König nach 24 h von 29 sec erhalten (Tabelle 1).

**Vergleichsbeispiel 3**

Unter Rühren (100 U/min) wurden 700 g einer wäßrigen, 50%igen Polyesteracrylatharzdispersion (Laromer PE 55 W der Firma BASF) mit 100 g entmineralisiertem Wasser verdünnt, auf 47 °C erwärmt und mit 0,7 g Isoascorbinsäure in 10 g Wasser versetzt. Im Anschluß erfolgte der Zulauf von 50 ml einer 2%igen wäßrigen Wasserstoffperoxidlösung über einen Zeitraum von 5 min. Schon wenige Minuten nach den Start der Polymerisation koagolierte die organische Phase der Emulsion und fiel aus.

Tabelle 1

| Beisiel | Festkörper % | Jodzahl nach Wijs (mg Jod / 100 g Polymer) | U (siehe Text) | MFT/°C °C | Pendelhärte nach König/sec | | Schleifbarkeit |
|---|---|---|---|---|---|---|---|
| | | | | | vor der UV-Härtung | 24 h nach der UV-Härtung Hg-Hochdruck-lampe [80 W/cm, 5m/min /Lampe] | |
| 1 | 41,0 | 52 | 0,75 | < 12 | 7 | 75 | |
| 2 | 47,3 | 55 | 0,73 | 41 | 12 | 78 | |
| 3 | 41,2 | 50 | 0,69 | < 12 | 9 | 77 | sehr gut |
| 4 | 40,1 | 49 | 0,74 | < 12 | 10 | 64 | |
| 5 | 43,2 | 53 | 0,77 | < 12 | 8 | 80 | |
| 6 | 29,9 | 52 | 0,75 | < 12 | 7 | 74 | sehr gut |
| 7 | 29,2 | 36 | 0,74 | < 12 | 10 | 73 | sehr gut |
| Vergleich 1 | 41,0 | 69 | - | - | - | 28 | klebt am Schleif-papier |
| Vergleich 2 | 40,1 | 72 | - | - | - | 29 | |

EP 0 685 542 B1

### Anwendungsbeispiel 1

Aus 85 Teilen der in Beispiel 1 b gefertigten Mikrogeldispersion, 1 Teil Mattierungsmittel (TS 100 der Firma Degussa), 1 Teil Photoinitiator (Darocur® 1173 der Firma Merck), 1 Teil Polyurethanverdicker (Schwegopur® VP 8050 der Firma Schwegmann) und 12 Teilen Wasser wurde eine Bindemitteldispersion formuliert. Diese wurde mittels Spritzpistole auf eine Holzoberfläche (Esche) mit 75 g/m$^2$ aufgetragen, bei 30°C im Umlufttrockenschrank 2 min abgelüftet und mit 4 m/min bei 45°C im Düsentrockner bis zur völligen Wasserfreiheit getrocknet. Die Aushärtung des Überzuges erfolgte unter einer Quecksilberhochdrucklampe (120 W/cm) bei einer Vorschubgeschwindigkeit von 10 m/min/Lampe. Die Lackoberfläche war sofort schleifbar und konnte sofort mit 70 g/m$^2$ überlackiert werden. Beim 2. Härtungsschritt betrug die Vorschubgeschwindigkeit 5 m/min/Lampe. Nach 7 Tagen Lagerung war der Lack chemikalienfest. Ein 1-stündiges Einwirken von Kaffee, Ethanol oder Aceton blieb ohne Wirkung auf die Lackoberfläche.

### Anwendungsbeispiel 2 (Vergleich)

Analog Anwendungsbeispiel 1 wurde eine Bindemitteldispersion formuliert und appliziert, bei der die in Beispiel 1 a) gefertigte, nicht polymerisierte Polyesterurethanharzemulsion zum Einsatz kam. Nach der Aushärtung des Films (wie in Anwendungsbeispiel 1 beschrieben) mit einer Vorschubgeschwindigkeit von 10 m/min/Lampe wurde eine nicht schleifbare, d. h. am Schleifpapier klebende Lackoberfläche erhalten.

Eine dem Anwendungsbeispiel 1 vergleichbare Lackoberflächenqualität wurde bei einem Vorschub von 1 m/min erzielt.

### Patentansprüche

**1.** Wäßrige, reaktive allyletherhaltige Mikrogeldispersion, dadurch gekennzeichnet, daß die Mikrogelteilchen einen mittleren Teilchendurchmesser von 0,01 bis 1 µm aufweisen, in Alkoholen, Ketonen, Estern, aromatischen und nichtaromatischen Kohlenwasserstoffen unlöslich aber quellbar sind, lösungsmittelfrei zu gleichmäßigen, transparenten reaktiven Filmen auftrocknen und Jodzahlen von 2 bis 100 aufweisen, und daß sie durch radikalische Polymerisation im Temperaturbereich von 20 - 100°C in einer wäßrigen Harzemulsion bestehend aus mindestens einem in Wasser emulgierten, allyletherhaltigen Polyester oder Polyesterurethan oder gegebenenfalls Mischungen von beiden und/oder Mischungen dieser mit anderen olefinisch ungesättigten und/oder gesättigten Verbindungen, wobei das Verhältnis U

$$U \triangleq \frac{\text{Jodzahl des erfindungsgemäßen Mikrogels}}{\text{Jodzahl der Mischung der Augsgangsverbindungen}} \text{ die}$$

Bedingung 0<U<1 vorzugsweise 0,4<U<0,9 erfüllt, hergestellt werden.

**2.** Verfahren zur Herstellung von Mikrogeldispersionen gemäß Anspruch 1, dadurch gekennzeichnet, daß sie durch radikalische Polymerisation im Temperaturbereich von 20 - 100°C in einer wäßrigen Harzemulsion, bestehend aus mindestens einem in Wasser emulgierten, allyletherhaltigen Polyester oder Polyesterurethan oder gegebenenfalls Mischungen von beiden und/oder Mischungen dieser mit anderen olefinisch ungesättigten und/oder gesättigten Verbindungen, wobei das Verhältnis U

$$U \triangleq \frac{\text{Jodzahl des erfindungsgemäßen Mikrogels}}{\text{Jodzahl der Mischung der Augsgangsverbindungen}} \text{ die}$$

Bedingung 0<U<1 vorzugsweise 0,4<U<0,9 erfüllt, hergestellt werden.

**3.** Verwendung von Mikrogeldispersionen gemäß Anspruch 1 als Lackrohstoff.

### Claims

**1.** An aqueous, reactive microgel dispersion containing allyl ether, characterised in that the microgel particles have an average particle diameter of 0.01 to 1 µm, are insoluble in but are capable of swelling in alcohols, ketones, esters, and aromatic and non-aromatic hydrocarbons, dry in the absence of solvent to form uniform, transparent, reactive films, and have iodine numbers of 2 to 100, and that they are produced by radical polymerisation within the temperature range of 20 - 100°C in an aqueous resin emulsion consisting of at least one allyl ether-containing polyester or polyester urethane which is emulsified in water, or optionally of mixtures of both and/or of mixtures of these with other olefinically unsaturated and/or saturated compounds, wherein the ratio U

$$\hat{=} \frac{\text{iodine number of the microgel according to the invention}}{\text{iodine number of the mixture of starting compounds}}$$

satisfies the condition 0<U<1, preferably 0.4<U<0.9.

2. A method of producing microgel emulsions according to claim 1, characterised in that they are produced by radical polymerisation within the temperature range of 20 - 100°C in an aqueous resin emulsion consisting of at least one allyl ether-containing polyester or polyester urethane which is emulsified in water, or optionally of mixtures of both and/or of mixtures of these with other olefinically unsaturated and/or saturated compounds, wherein the ratio U

$$\hat{=} \frac{\text{iodine number of the microgel according to the invention}}{\text{iodine number of the mixture of starting compounds}}$$

satisfies the condition 0<U<1, preferably 0.4<U<0.9.

3. The use of microgel dispersions according to claim 1 as a lacquer raw material.


**Revendications**

1. Dispersion aqueuse réactive de microgels contenant des éthers allyliques, caractérisée en ce que les particules de microgel ont un diamètre moyen de 0,01 à 1 µm, sont insolubles mais gonflables dans les alcools, les cétones, les esters, les hydrocarbures aromatiques et non aromatiques, sèchent en l'absence de solvants en pellicules régulières, transparentes et réactives et ont des indices d'iode de 2 à 100, et en ce qu'elles sont préparées par polymérisation radicalaire dans l'intervalle de température de 20 à 100°C dans une émulsion aqueuse de résine consistant en au moins un polyester ou polyester-uréthane contenant des éthers allyliques, ou éventuellement un mélange des deux et/ou un mélange de ces produits avec d'autres composés à insaturation oléfinique et/ou saturés, émulsionnés dans l'eau, avec un rapport U

$$U = \frac{\text{Indice d'iode du microgel selon l'invention}}{\text{Indice d'iode du mélange des composés de dé}}$$

qui satisfait à la condition 0<U<1, de préférence 0,4<U<0,9.

2. Procédé de préparation des dispersions de microgels selon revendication 1, caractérisé en ce qu'elles sont préparées par polymérisation radicalaire dans l'intervalle de température de 20 à 100°C dans une émulsion aqueuse de résine consistant en au moins un polyéther ou polyester-uréthane contenant des éthers allyliques, émulsionnés dans l'eau, ou le cas échéant un mélange des deux types de produits et/ou un mélange de ces produits avec d'autres composés à insaturation oléfinique et/ou saturés, avec un rapport

$$U = \frac{\text{Indice d'iode du microgel selon l'invention}}{\text{Indice d'iode du mélange des composés de départ}}$$

qui satisfait à la condition 0<U<1, de préférence 0,4<U<0,9.

3. Utilisation des dispersions de microgels selon revendication 1 en tant que matières premières de peintures et de vernis.